# EUROPEAN PATENT APPLICATION

(11) **EP 0 850 812 A1**
(43) Date of publication of application: **01.07.1998**
(21) Application number: 97630086.3
(22) Date of filing: 05.12.1997
(51) Int. Cl.: B60T 8/32

(54) **Emergency brake system for a vehicle**

(30) Priority: 12.12.1996 KR 9664717
(71) Applicant: Jin, Ki Hwan, Wonju-city, Kangwon-do (KR)
(72) Inventor: Jin, Ki Hwan, Wonju-city, Kangwon-do (KR)
(74) Representative: Schmitz, Jean-Marie

(57) **Abstract**

An emergency brake system for a vehicle which ensures a powerful braking performance when a sudden braking operation occurs. The emergency brake system for a vehicle brakes a certain portion in an out put shaft of an engine, or preferably a certain portion in a flywheel (19) when an excess pressure exceeding a pressure predetermined at a brake pedal is applied to the brake pedal. The emergency brake system for a vehicle can use a separate second hydraulic pump (6) in order to apply more powerful braking force to the out put shaft of an engine or the flywheel.

## Description

### BACKGROUND OF THE INVENTION

The present invention relates to an emergency brake system for a vehicle, and more particularly to an emergency brake system for a vehicle which ensures a powerful braking performance when a sudden braking operation occurs.

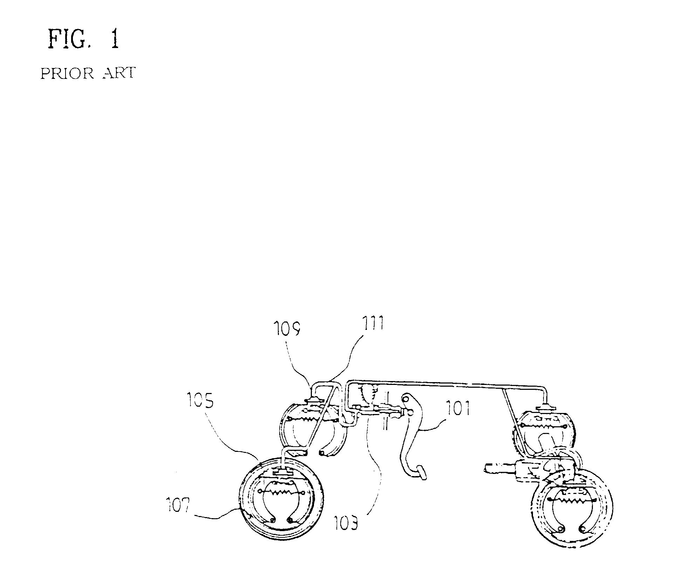

In a vehicle like a car, a hydraulic brake is generally used for braking svstem. As shown in FIG. 1, the hydraulic brake system includes a pedal(101), a master cylinder(103) that exerts hydraulic force by being pressed by the pedal(101), a wheel cylinder(109) that urges brake shoes(105) toward a brake drum(107) so that braking force may be applied to the brake drum, and a brake pipe(111) forming an hydraulic line.

In general, each wheel may stops its rotation if a sudden braking operation with substantially high power is applied to the master cylinder, which makes impossible to steer the vehicle properly and may reduce the actual braking force Moreover, under certain circumstances the vehicle may spins because of an uneven braking force applied to each wheel, which can bring dangerous situations.

There have been many means to restrain such a "lock" of wheel, among these is a Anti-lock Brake System(ABS) being used these days. The ABS, however, is consisted very intricately and the price is relatively high, so it is generally attached as an option item by a customer.

It is known that it is effective to use "engine brake" for the vehicle without ABS when drives on the slippery road due to rain or snow. Engine brake means, for example, that the speed of the vehicle drops by the engine through the rapid shift down of the shift lever from high step to low step.

In most cases, however, it is almost impossible for a driver to manipulate such an engine brake on any unexpected urgent moments. In the vehicle provided with an automatic transmission. it is not easy to obtain the effect of engine brake because about 2 to 4 seconds of delay time exists until the actual working of the shift down becomes effective.

Accordingly, it is an object of the present invention to provide an emergency brake system for a vehicle which ensures a powerful braking performance when a sudden braking operation occurs whereby reduces the braking time and braking distance considerably.

In accordance with one aspect of the present invention there is provided an emergency brake system for a vehicle, which comprises a sensing means for sensing an excess pressure exceeding a pressure predetermined at a brake pedal when the brake pedal is pressed, and an emergency brake means being installed in a position in an out put shaft of an engine such that applying a braking force to a portion in the out put shaft of the engine, the emergency brake means being actuated by the sensing means when a pressure exceeding the pressure predetermined at the brake pedal applies to the brake pedal.

In accordance with another aspect of the present invention there is provided an emergency brake system for a vehicle, wherein said emergency, brake means comprises a brake cylinder being actuated by hydraulic pressure of a master cylinder through a branch line branched from a supply line communicating the master cylinder with a wheel cylinder, a control valve for switching valve position thereof from closed position closing the supply line to open position opening the supply line when an excess pressure exceeding the pressure predetermined at the brake pedal is sensed by the sensing means, the control valve being positioned in the branch line, and a braking member being actuated by the brake cylinder.

In accordance with still another aspect of the present invention there is provided an emergency brake system for a vehicle, wherein said emergency brake means comprises a brake cylinder being actuated by hydraulic pressure of a master cylinder through a branch line branched from a supply line communicating the master cylinder with a wheel cylinder, a check valve for opening the branch line only when the pressure in the branch line exceeds a pressure predetermined at the branch line, the check valve being positioned in the branch line, and a braking member being actuated by the brake cylinder.

In accordance with a further aspect of the present invention there is provided an emergency brake system for a vehicle provided with a brake pedal, and a master cylinder supplying a hydraulic pressure to brake each wheel of the vehicle when the brake pedal is pressed, which comprises a second hydraulic pump being separately driven from a first hydraulic pump supplying a hydraulic pressure to the master cylinder, a sensing means for being electrically connected to a power supply when the brake pedal is pressed with an excess pressure exceeding a pressure predetermined at the brake pedal, the brake pedal being positioned with a distance apart from the moving direction of the brake pedal. and an emergency brake means being installed in a position in an out put shaft of an engine such that applying a braking force with a hydraulic pressure from the second hydraulic pump to a portion in the out put shaft of the engine, the emergency brake means being actuated by the sensing means when a pressure exceeding the pressure predetermined at the brake pedal applies to the brake pedal.

The characteristics of the present invention will be understood more fully from the following detail description and accompanying drawings showing a preferred embodiment of the invention.

### BRIEF DESCRIPTION OF DRAWINGS

FIG. 1 is a schematic diagram showing a hydraulic brake system according to a prior art;
FIG. 2 is a schematic diagram showing an emergency brake system for a vehicle according to a preferred embodiment of the present invention;
FIG. 3 is a schematic diagram showing an emergency brake system for a vehicle according to another preferred embodiment of the present invention.
FIG. 4 is a schematic diagram showing an emergency brake system for a vehicle according to still another preferred embodiment of the present invention.
FIG. 5 is a schematic diagram showing an emergency brake system for a vehicle according to a preferred embodiment of the present invention,
wherein another preferred embodiment of a braking member is illustrated.

### DETAILED DESCRIPTION OF THE INVENTION

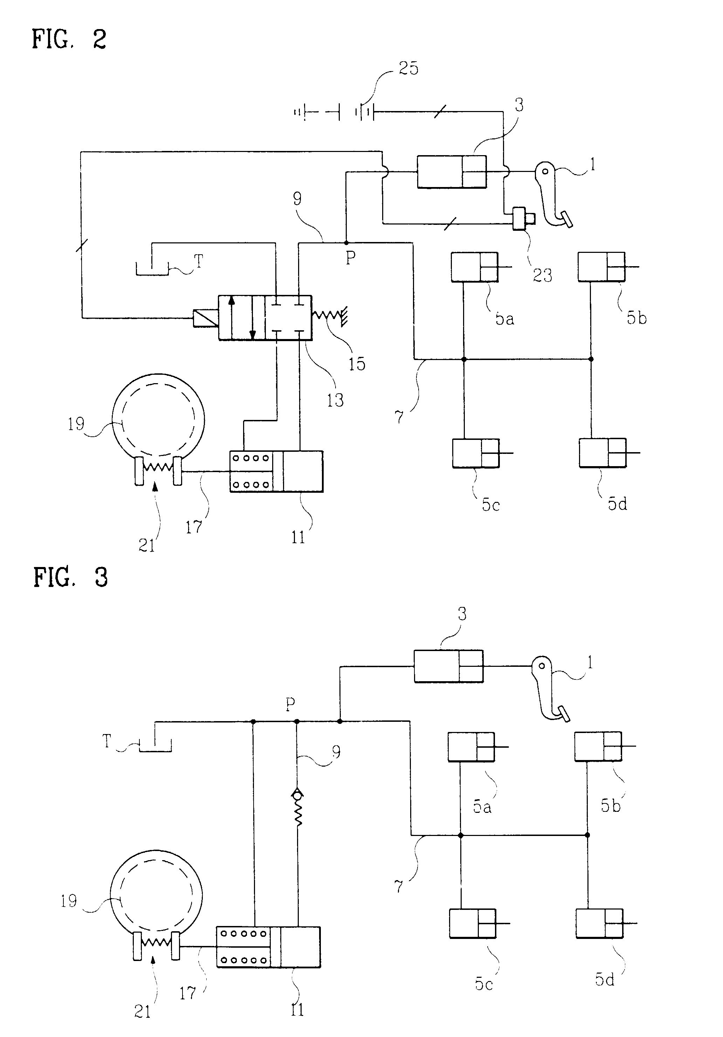

FIG. 2 shows a schematic diagram showing an emergency brake system for a vehicle according to a preferred embodiment of the present invention. As illustrated in FIG. 2, there are provided a brake pedal(1), a master cylinder(3) exerting hydraulic pressure when the brake pedal(1) is pressed, and wheel cylinders(5a, 5b, 5c, 5d) applying braking force to each wheel(not shown) with hydraulic pressure from the master cylinder(3). The master cylinder(3) and wheel cylinders(5a, 5b, 5c, 5d) are connected by a supply line(7). A branch line(9) is branched from the supply line(7) at a junction (P). An emergency brake cylinder(11) is installed so as to be actuated by hydraulic pressure being supplied from the master cylinder(3) through the branch line(9). A control valve(13) for opening and closing the branch line(9) by applying a current thereto is provided between the junction(P) and the emergency brake cylinder(11). The control valve may preferably be a solenoid valve. The initial state of the control valve(13) is closed by a biasing member(15).

A braking member(21) is installed at one end of a cylinder rod(17) of the emergency brake cylinder(11). The braking member(21) is positioned at any portion in a out put shaft of an engine(not shown) or preferably at any portion in a fly wheel(19) so as to brake and release the out put shaft of the engine or the fly wheel(19). The braking member(21) may preferably be a band brake.

A sensing means(23) is provided at a rear position of the brake pedal(1) to sense the state whether the brake pedal(1) is pressed strongly just like the case of a sudden braking operation. The sensing means(23) may be various kinds of sensors such as limit switch being switched on/off according to a stroke of the brake pedal(10) and being apart from the brake pedal(1) with a certain distance. Though the distance between the brake pedal(1) and the sensing means(23) can be adjusted as required, it is preferably positioned at a distance sufficient to be turned on when the brake pedal(1) is pressed strongly by a driver in a sudden braking operation. When the sensing means(23) is turned on, a certain current from a power supply(25) such as a battery is applied to the control valve(l3) through the sensing means(23), switching the internal line of the control valve(13) to open the branch line(9).

When the driver presses the brake pedal(1) in order to brake or to reduce the speed the vehicle with a low pressing power insufficient for the brake pedal(1) to be reached to the sensing means(23), hydraulic pressure in the master cylinder(3) is transferred to each wheel cylinder(5a, 5b, 5c, 5d) whereby each wheel can be braked. At this time, while some hydraulic pressure in master cylinder(3) is transferred toward branch lire(9), the hydraulic pressure cannot be supplied to the emergency brake cylinder(11) whereby the braking member(21) does not work because the branch line(9) is closed by control valve(13).

When the brake pedal(1) is pressed strongly by the driver such as the case of a sudden braking operation. however, the sensing means(23) is turned on whereby a certain current is applied to the control valve(13) to open the branch line(9). At this time, the braking member(21) is actuated as some hydraulic pressure in master cylinder(3) is supplied to the emergency brake cylinder(11) through branch line(9) and control valve(13). The actuation of the braking member(21) occurs substantially at the same time with the actuation of the wheel cylinder(5a, 5b, 5c, 5d). Because the braking member(21) brakes a certain portion of the out put shaft of the engine or flywheel(19) at the prior position to a transmission(not shown). in general, substantially high braking effect may be accomplished with substantially, low hydraulic pressure. Additionally, such a braking power does not brake each wheel, so the braking power is applied to each wheel substantially evenly. Thus, unbalanced braking is prevented, ensuring a stable braking performance like using engine brake.

FIG. 3 illustrates a schematic diagram showing an emergency brake system for a vehicle according to another preferred embodiment of the present invention. In a similar way as shown in FIG., there are provided a brake pedal(1), a master cylinder(3) exerting hydraulic pressure when the brake pedal(1) is pressed, and wheel cylinders(5a, 5b, 5c, 5d) applying braking force to each wheel(not shown) with hydraulic pressure from the master cylinder(3). The master cylinder(3) and wheel cylinders(5a, 5b, 5c, 5d) are connected by a supply line(7). A branch line(9) is branched from the supply line(7) at a junction (P). An emergency brake cylinder(11) is installed so as to be actuated by hydraulic pressure being supplied from the master cylinder(3) through the branch line(9).

A check valve(41) is positioned in the branch line(9) so as to open the branch line(9) only when the pressure in the branch line(9) exceeds a pressure predetermined at the branch line(9).

When the driver presses the brake pedal(1) in order to brake or to reduce the speed the vehicle with a low pressing power insufficient for the brake pedal(1) to be reached to the sensing means(23), hydraulic pressure in the master cylinder(3) is transferred to each wheel cylinder(5a, 5b, 5c, 5d) whereby each wheel can be braked. At this time, while some hydraulic pressure in master cylinder(3) is transferred toward branch line(9), the branch line(9) is closed by check valve(41) because the hydraulic pressure in the branch line(9) does not exceeds a certain pressure predetermined at the check valve(41). Accordingly, hydraulic pressure cannot be applied to the emergency brake cylinder(11), so the braking member(21) does not work.

When the brake pedal(1) is pressed strongly by the driver such as the case of a sudden braking operation, however, hydraulic pressure in the branch line(9) rises. If the hydraulic pressure in the branch line(9) exceeds a certain pressure predetermined at the check valve(41), the branch line(9) will be opened. At this time, the braking member(21) is actuated as some hydraulic pressure in master cylinder(3) is supplied to the emergency brake cylinder(11) through branch line(9).

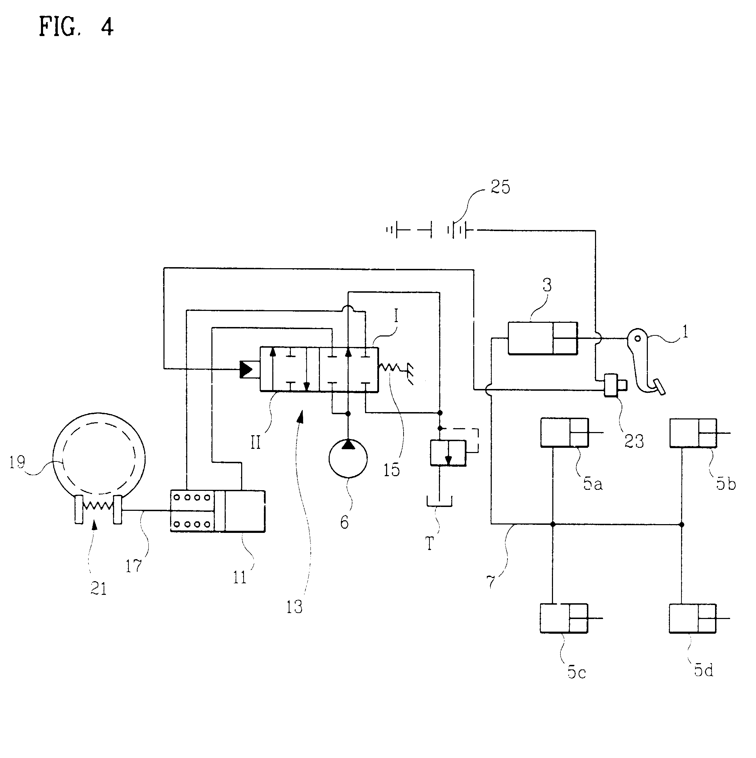

Now referring to FIG. 4, according to still another preferred embodiment of the present invention is illustrated. There are provided a brake pedal(1), a master cylinder(3) being actuated as the brake pedal(1) is pressed within the stroke thereof. The master cylinder(3) and wheel cylinders(5a, 5b, 5c, 5d) are connected by a supply line(7).

The sensing means(23) is installed with a certain distance apart from the brake pedal(1) at rear position of the brake pedal(1). The sensing means(23) is installed such that when the brake pedal(1) is contacts the sensing means(23) due to an excess pressure exceeding a pressure predetermined at a brake pedal(10) such as the case of a sudden braking operation, the power supply(25) is connected electrically to the sensing means(23).

There is also provided a second hydraulic pump(6) separately driven from a first hydraulic pump(not shown) supplying a hydraulic pressure to the master cylinder(3). The control valve(13) for controlling the flowing direction of hydraulic fluid from the second hydraulic pump(6) is installed in a second supply line(70) of the second hydraulic pump(6). The internal flowing direction of the control valve(13) is switched according to a certain current applied thereto by the sensing means(23). A braking member(21) is installed at one end of a cylinder rod(17) of the emergency brake cylinder(11).

When the driver presses the brake pedal(1) in order to brake or to reduce the speed the vehicle with a low pressing power insufficient for the brake pedal(1) to be reached to the sensing means(23), hydraulic pressure in the master cylinder(3) is transferred to each wheel cylinder(5a, 5b, 5c, 5d) through the supply line(7) whereby each wheel can be braked. At this time, hydraulic fluid from the second hydraulic pump(6) is unloaded to a tank(T) by biasing force of a biasing member(15) provided at one side of the control valve(13).

When the driver presses the brake pedal(1) with strong pressure higher than the pressure predetermined at the brake pedal(1) in order to make a sudden braking operation, however, the sensing means(23) is turned on by being contacted with the brake pedal(1) whereby a certain current from the power supply(25) is applied to the control valve(13). Accordingly, the internal line of the control valve(13) is switched to the right position on the drawing(from a first position(I) to a second position(II)), so hydraulic fluid from the second hydraulic pump(6) is supplied to a large chamber of the emergency brake cylinder(11). Thus, the emergency brake cylinder(11) is actuated, actuating the braking member connected to the cylinder rod(17). As described above, because the braking member(21) brakes a certain portion of the out put shaft of the engine or flywheel(19) at the prior position to a transmission, substantially high braking effect may be accomplished with substantially low hydraulic pressure. Moreover, more powerful braking power can be accomplished by using a separate second hydraulic pump.

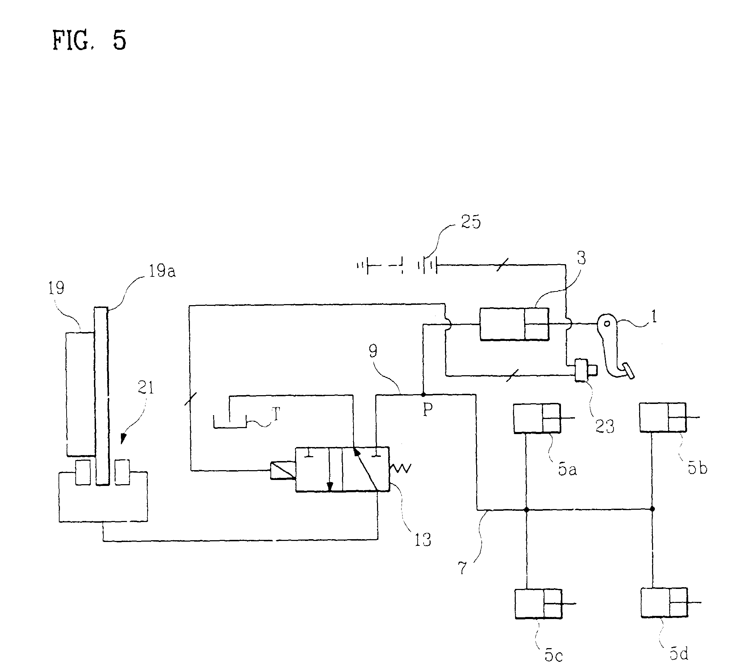

FIG. 5 shows another preferred embodiment of the braking member(21). In this embodiment, the braking member(21) may be a disk brake which brakes a disk(19a) provided at one side of the flywheel(19).

As described above, the emergency brake system for a vehicle according to preferred embodiments of the present invention is made in a simple construction to reduce the cost, and considerably reduces the braking time and braking distance to protect the passengers at its maximum from the danger.

It is understood that the foregoing description is only illustrative of the preferred embodiment of the invention. Various alternatives and modifications can be devised by those skilled in the art without departing from the invention. Thus, the present invention is intended to cover all such alternatives and modifications which fall within the scope of the appended claims.

## Claims

1. An emergency brake system for a vehicle, which comprising:
a sensing means for sensing an excess pressure exceeding a pressure predetermined at a brake pedal when the brake pedal is pressed, and
an emergency brake means being installed in a position in an out put shaft of an engine such that applying a braking force to a portion in the out put shaft of the engine, the emergency brake means being actuated by the sensing means when a pressure exceeding the pressure predetermined at the brake pedal applies to the brake pedal.

2. An emergency brake system for a vehicle, as set forth in claim 1, wherein said emergency brake means comprises an emergency brake cylinder being actuated by hydraulic pressure of a master cylinder through a branch line branched from a supply line communicating the master cylinder with a wheel cylinder,
a control valve for switching valve position thereof from closed position closing the supply line to open position opening the supply line when an excess pressure exceeding the pressure predetermined at the brake pedal is sensed by the sensing means, the control valve being positioned in the branch line, and
a braking member being actuated by the emergency brake cylinder.

3. An emergency brake system for a vehicle, as set forth in claim 1, wherein said emergency brake means comprises an emergency brake cylinder being actuated by hydraulic pressure of a master cylinder through a branch line branched from a supply line communicating the master cylinder with a wheel cylinder,
a check valve for opening the branch line only when the pressure in the branch line exceeds a pressure predetermined at the branch line, the check valve being positioned in the branch line, and
a braking member being actuated by the emergency brake cylinder.

4. An emergency brake system for a vehicle, as set forth in claim 1, wherein said portion in the out put shaft of the engine is a portion in a flywheel.

5. An emergency brake system for a vehicle, as set forth in claim 1, wherein said sensing means is a limit switch being switched on/off according to a stroke of the brake pedal, the limit switch being positioned with a distance apart from the brake pedal.

6. An emergency brake system for a vehicle, as set forth in claim 2 or claim 3, wherein said braking member is a band brake for braking a portion in the out put shaft of the engine.

7. An emergency brake system for a vehicle, as set forth in claim 2, wherein said control valve is a solenoid valve for opening and closing the branch line by receiving a current responding to the on/off switching of the sensing means.

8. An emergency brake system for a vehicle, as set forth in claim 1, wherein said emergency brake means comprises a control valve for switching valve position thereof from closed position closing the supply line to open position opening the supply line when an excess pressure exceeding the pressure predetermined at the brake pedal is sensed by the sensing means, the control valve being positioned in the branch line, and
a braking member being actuated by the emergency brake cylinder.

9. An emergency brake system for a vehicle, as set forth in claim 8, wherein said a braking member is a disk brake which brakes a disk provided at one side of a flywheel.

10. An emergency brake system for a vehicle provided with a brake pedal, and a master cylinder supplying a hydraulic pressure to brake each wheel of the vehicle when the brake pedal is pressed, which comprising:
a second hydraulic pump being separately driven from a first hydraulic pump supplying a hydraulic pressure to the master cylinder,
a sensing means for being electrically connected to a power supply when the brake pedal is pressed with an excess pressure exceeding a pressure predetermined at the brake pedal, the brake pedal being positioned with a distance apart from the moving direction of the brake pedal, and
an emergency brake means being installed in a position in an out put shaft of an engine such that applying a braking force with a hydraulic pressure from the second hydraulic pump to a portion in the out put shaft of the engine, the emergency brake means being actuated by the sensing means when a pressure exceeding the pressure predetermined at the brake pedal applies to the brake pedal.

11. An emergency brake system for a vehicle, as set forth in claim 10, wherein said emergency brake means comprises a control valve for switching the flowing direction of a hydraulic fluid by being switched position thereof according to the electric signal applied thereto from the sensing means, the control valve being positioned in a second supply line of the second hydraulic pump,
an emergency brake cylinder for applying a braking force to a portion in the out put shaft of the engine with the hydraulic pressure from the second hydraulic pump through the control valve when a pressure exceeding the pressure predetermined at the brake pedal applies to the brake pedal, and
a braking member being complected to one end of the emergency brake cylinder to apply braking force to the portion in the out put shaft of the engine.

12. An emergency brake system for a vehicle, as set forth in claim 10, wherein said portion in the out put shaft of the engine is a portion in a flywheel.

13. An emergency brake system for a vehicle, as set forth in claim 10, wherein said sensing means is a limit switch being switched on/off according to a stroke of the brake pedal, the limit switch being positioned with a distance apart from the brake pedal.

14. An emergency brake system for a vehicle, as set forth in claim 11, wherein said braking member is a band brake for braking a portion in the out put shaft of the engine.

15. An emergency brake system for a vehicle, as set forth in claim 11, wherein said control valve is a solenoid valve for opening and closing the branch line by receiving a current responding to the on/off switching of the sensing means.

16. An emergency brake system for a vehicle, as set forth in claim 10, wherein said emergency brake means comprises a control valve for switching valve position thereof from closed position closing the supply line to open position opening the supply line when an excess pressure exceeding the pressure predetermined at the brake pedal is sensed by the sensing means, the control valve being positioned in the branch line, and
a braking member being actuated by the emergency brake cylinder.

17. An emergency brake system for a vehicle, as set forth in claim 16, wherein said a braking member is a disk brake which brakes a disk provided at one side of a flywheel.

18. An emergency brake system for a vehicle provided with a brake pedal. and a master cylinder supplying a hydraulic pressure to brake each wheel of the vehicle when the brake pedal is pressed, which comprising:
a second hydraulic pump being separately driven from a first hydraulic pump supplying a hydraulic pressure to the master cylinder,
a sensing means for being electrically connected to a power supply when the brake pedal is pressed with an excess pressure exceeding a pressure predetermined at the brake pedal, the brake pedal being positioned with a distance apart from the moving direction of the brake pedal,
a control valve for switching the flowing direction of a hydraulic fluid by being switched position thereof according to the electric signal applied thereto from the sensing means, the control valve being positioned in a second supply line of the second hydraulic pump,
an emergency brake cylinder for applying a braking force to a portion in the out put shaft of the engine with the hydraulic pressure from the second hydraulic pump through the control valve when a pressure exceeding the pressure predetermined at the brake pedal applies to the brake pedal, and
a braking member being connected to one end of the emergency brake cylinder to apply braking force to the portion in the out put shaft of the engine.

19. An emergency brake system for a vehicle, as set forth in claim 18, wherein said portion in the out put shaft of the engine is a portion in a flywheel.

20. An emergency brake system for a vehicle, as set forth in claim 18, wherein said sensing means is a limit switch being switched on/off according to a stroke of the brake pedal, the limit switch being positioned with a distance apart from the brake pedal.

21. An emergency brake system for a vehicle, as set forth in claim 18, wherein said braking member is a band brake for braking a portion in the out put shaft of the engine.

22. An emergency brake system for a vehicle, as set forth in claim 18, wherein said control valve is a solenoid valve for opening and closing the branch line by receiving a current responding to the on/off switching of the sensing means.
